# EUROPEAN PATENT SPECIFICATION

(11) **EP 3 492 325 B1**
(45) Date of publication and mention of the grant of the patent: **16.11.2022**
(21) Application number: 18208006.9
(22) Date of filing: 23.11.2018
(51) Int. Cl.: B60R 25/10, B60R 25/102, B60R 13/10

(54) **ELECTRONIC SYSTEM FOR THE DETECTION AND REPORTING OF AN UNAUTHORIZED REMOVAL OF A REGISTRATION LICENSE PLATE FROM A MOTOR VEHICLE**
ELEKTRONISCHES SYSTEM ZUR ERKENNUNG UND MELDUNG EINER UNBEFUGTEN ENTFERNUNG EINES KENNZEICHENS VON EINEM KRAFTFAHRZEUG
SYSTÈME ÉLECTRONIQUE POUR LA DÉTECTION ET LE SIGNALEMENT D'UN ENLÈVEMENT NON AUTORISÉ D'UNE PLAQUE D'IMMATRICULATION D'UN VÉHICULE À MOTEUR

(30) Priority: 01.12.2017 IT 201700139055
(43) Date of publication of application: 05.06.2019
(73) Proprietor: Iannotta, Raffaele, 03030 Fibreno (FR) (IT); Palumbo, Giorgio, 90145 Palermo (IT)
(72) Inventor: Iannotta, Raffaele, 03030 Fibreno (FR) (IT); Palumbo, Giorgio, 90145 Palermo (IT)
(74) Representative: Pennacchio, Salvatore Giovanni

(56) References cited:
- EP-A1- 1 903 531
- WO-A1-02/14110
- WO-A1-2017/041115
- GB-A- 2 453 598
- US-A1- 2005 253 726
- US-A1- 2007 018 797
- US-A1- 2007 171 077

## Description

### TECHNICAL BACKGROUND OF THE INVENTION

### Field of application

The present invention relates in general to the field of electronic identification systems of motor vehicles associated with the registration license plates of such vehicles. In particular, the invention relates to an electronic system for the detection and reporting of an unauthorized removal of a registration license plate from a motor vehicle having anti-fraud and anti-terrorism purposes.

### Prior art

The problems associated with identity fraud of all types are well known in modern society. In particular, identity fraud and the illegal cloning of a motor vehicle currently are taking on worrying proportions in the automobile field.

Cloning a motor vehicle is a process in which a registration license plate of the vehicle is stolen, or a copy thereof is made, to be attached to another vehicle, for example of the same brand, model and similar color to those of the original vehicle.

In such a case, the original vehicle is said to be cloned. The vehicle on which the stolen registration license plate or the copy of such a license plate is attached is called a clone. The consequences of such cloning of the vehicle are that the driver of the clone is capable of avoiding the fines for illegal actions involving the vehicle itself, such as excess speed, parking infractions, unauthorized entry in restricted traffic areas. On the other hand, the owners of cloned vehicles often receive fines for infractions of the Highway Code that they did not commit. Moreover, the clones are often stolen cars which are used to commit crimes and the fact that they are clones makes it very difficult to trace the users thereof for criminal purposes.

Solutions are also known which provide the use of electronically-labeled registration license plates to allow the monitoring/identification of vehicles, like e.g. in WO2017/041115. For example, the registration license plates may comprise electronic radio-frequency identification or RFID (acronym for Radio Frequency IDentification) devices connected to or incorporated therein. Such RFID devices are capable of saving specific information related to the vehicle on which the registration license plate is applied.

For example, when the vehicle is registered, an unequivocal identification number for each particular vehicle may be recorded on the RFID device in conjunction with license plate number of the vehicle itself. An RFID reader is capable of reading, from a distance, the information contained in the RFID device to establish the identity of the vehicle. Such an RFID reader may be attached on a road, for example on a portal transversely to the carriageway to identify the individual vehicles in the traffic passing under the portal. Alternatively, a portable RFID reader may be used for example, by police officers to query the RFID devices associated with the license plates of the vehicle and to determine whether or not a vehicle was cloned by comparing the data read by the RFID device with the visible identification data (license plate number) of the vehicle.

However, such anti-theft devices of the known art do not provide a sufficiently high level of security and deterrence against the identity theft of a motor vehicle. Accordingly, the need is felt to have a system which not only allows the theft of the registration license plates from a motor vehicle to be dissuaded but especially ensures an easier monitoring of the fleet of vehicles circulating in a preset territory, particularly for the purposes of anti-terrorism.

### SUMMARY OF THE INVENTION

It is the object of the present invention to devise and provide an electronic system for the detection and reporting of an unauthorized removal of a registration license plate from a motor vehicle which allows to at least partially overcome the limits of anti-theft systems of the known art by acting as a deterrent against the theft of registration license plates, in particular with anti-fraud and anti-terrorism purposes.

Such an object is achieved by means of an electronic system for the detection and reporting of an unauthorized removal of a registration license plate from a motor vehicle according to claim 1.

Preferred embodiments of such an electronic system are described in the dependent claims 2 to 11.

### BRIEF DESCRIPTION OF THE DRAWINGS

Further features and advantages of the electronic system for the detection and reporting of an unauthorized removal of a registration license plate from a motor vehicle according to the invention will become apparent from the following description of preferred embodiments thereof, given only by way of nonlimiting, indicative example, with reference to the accompanying drawings, in which:

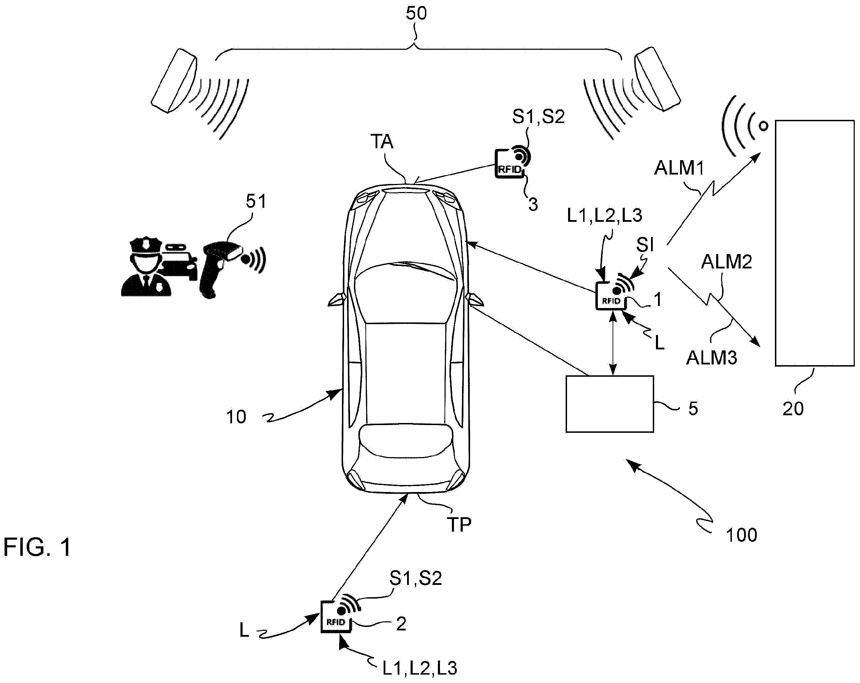

- **figure 1** diagrammatically shows the electronic system for the detection and reporting, to an electronic unit for the management of the reporting, of an unauthorized removal of a registration license plate from a motor vehicle according to the invention, such a system comprises at least one electronic radio-frequency identification or RFID device also, but not exhaustively, operating to be read with a respective radio-frequency reading apparatus;

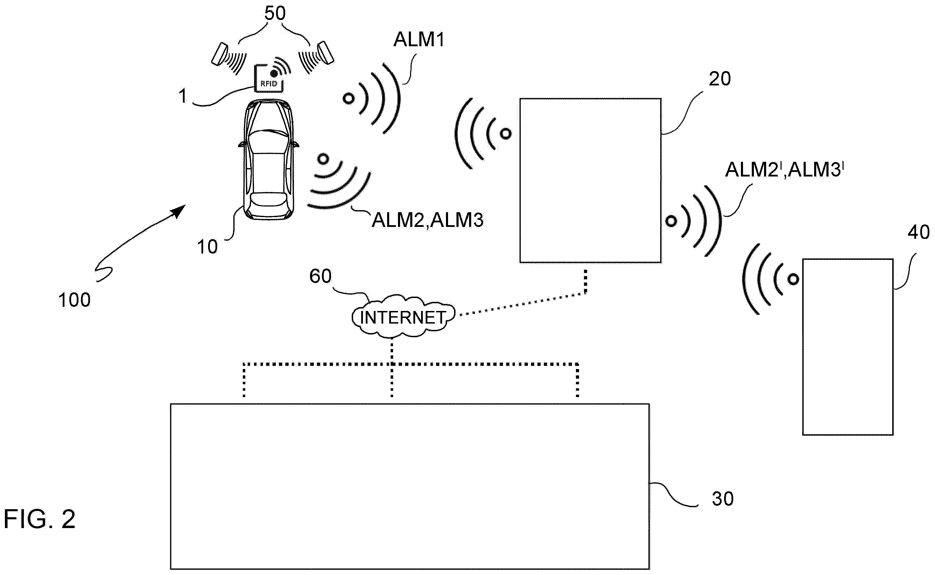

- **figure 2** diagrammatically shows the electronic system in figure 1, configured to establish a wireless communication with remote processing apparatuses.

Equal or similar elements are indicated with the same numerals in the aforesaid figures.

### DETAILED DESCRIPTION OF PREFERRED EMBODIMENTS

With reference to figures 1 to 2, an electronic system 100 for the detection and reporting of an unauthorized removal of a registration license plate TP, TA from a motor vehicle 10 according to the present invention is indicated with reference numeral 100.

Later, the term "unauthorized removal" means both a detachment of the license plate from the bodywork and taking the same away from the motor vehicle 10, and the fraudulent tampering with an enclosure adapted to contain the aforesaid license plate.

For simplicity, the aforesaid electronic system 100 for the detection and reporting of an unauthorized removal of a registration license plate from a vehicle is also indicated below as electronic system or more simply, system.

Moreover, the term motor vehicle 10 is used later in the description to indifferently indicate both a motor vehicle such as e.g. an automobile, van, pickup, truck, bus or similar passenger or goods transport vehicle, and a motorcycle.

The electronic system 100 comprises an electronic transceiver device 1 attached to a portion of the bodywork of the motor vehicle 10. Such a device may be for example, connected to a supply voltage source of the motor vehicle, such as for example, a battery of the vehicle, or it may be equipped with its own supply voltage source or battery, which is autonomous from that of the vehicle.

Moreover, system 100 comprises at least one transponder 2, 3 attached to one of the license plates TP, TA of the motor vehicle 10.

It is worth noting that the electronic transceiver device 1 and the at least one transponder 2, 3 are configured to communicate with each other through a wireless communication channel. In particular, the electronic transceiver device 1 of system 100 is configured to periodically transmit a wireless query signal SI within a respective query region towards the aforesaid at least one transponder 2, 3.

Query region below means a transmission area of a useful signal delimited on the basis of the strength of the signal emitted. Accordingly, it is important for the strength of the signals exchanged between the electronic transceiver device 1 and the at least one transponder 2, 3 to be sufficient to ensure the coverage of a transmission area which range allows at least the distance between the electronic transceiver device 1 and transponder 2, 3 to be equaled.

Moreover, such an electronic transceiver device 1 of system 100 is configured to receive:
a first response signal S1 from the aforesaid at least one transponder 2, 3 when the at least one transponder is within the query region;
a second response signal S2 when the at least one transponder 2, 3 is brought outside the query region.

In one example embodiment, the aforesaid second response signal S2 is a signal having a strength which is less than the strength of the first response signal S1.

In a different example embodiment, such a second response signal S2 is similar to a null signal, that is an absence of signal.

It is worth noting that the transceiver device 1 and the at least one transponder 2, 3 may contain identification data of the motor vehicle 10 which allow such a vehicle to be unequivocally identified within a fleet of vehicles circulating in a given territory.

Advantageously, system 100 further comprises means L for the sequential and chronological recording of:
- a first alarm event, in which the at least one transponder 2, 3 is brought outside the query region;
- a second alarm event, in which the supply voltage source of the motor vehicle 10 is disconnected from the electronic transceiver device 1;
- a third alarm event arising from a fraudulent tampering with the enclosure adapted to contain the registration license plate TP, TA of vehicle 10.

System 100 further comprises wireless signaling means ALM1, ALM2 indicative of the occurrence of at least one of the aforesaid first, second and third alarm events. The features of such signals are described in detail later.

In a preferred embodiment, the electronic transceiver device 1 is a label or an active tag operating in radio-frequency, that is an RFID tag, which can be used according to the RTLS (Real Time Locating System) communication mode.

It is worth noting that the electronic transceiver device 1 may be equipped with an electronic geolocation module operating according to a global positioning system, for example GPS (Global Positioning System), to allow the continuous geolocation in real time of such an electronic transceiver device 1 and accordingly of vehicle 10.

In such a preferred embodiment, the at least one transponder comprises a first transponder 2 attached to the rear license plate TP of the motor vehicle 10 and a second transponder 3 associated with the front license plate TA of such a vehicle 10. At least one of the two transponders 2, 3 is a passive RFID tag.

For example, the first transponder 2, attached to the rear license plate TP, is an active RFID tag and the second transponder 3, attached to the front license plate, is a passive RFID tag.

As is known to an expert in the field, passive RFID tags are configured to receive the energy required for the operation thereof directly from a radio-frequency reading apparatus or RFID reader in which a query signal in radio-frequency emitted by the antenna of the RFID reader generates an electromagnetic field which causes a voltage in a respective winding in the tag. This generates the energy required for the communication of the data by the passive tag. In reference to figures 1 and 2, such an RFID reader may be for example, a portal 50 attached transversely to the road carriageway to identify the individual vehicles in the traffic passing under the portal. A portable reader 51 may instead be used for example, by police agents to query the RFID devices associated with the license plates of the vehicle.

Active tags instead provide the use of a respective internal battery adapted to supply the circuits thereof. Such active tags are characterized by the fact that they may perform a transmission of signals in radio-frequency RF of the broadcast type towards the RFID reader 50, 51 or towards the passive tags at predefined time intervals, and thus they are a main element for manufacturing RTLS systems.

In one example embodiment, the above-mentioned sequential and chronological recording means L of a first, a second and a third alarm event are associated with the electronic transceiver device 1, that is with the active RTLS tag 1. For example, such sequential recording means L are saved in a storage unit which equips such an RTLS tag.

In a different example embodiment, the sequential and chronological recording means L of the first, second and third alarm events are associated with the at least one transponder 2, 3. In particular, such sequential and chronological recording means L are associated with the active RFID tag 2 attached to the rear license plate TP of the motor vehicle 10. In greater detail, such sequential and chronological recording means L are saved in a storage which equips such an active RFID tag 2.

In one example embodiment of system 100 of the invention, the sequential and chronological recording means L materialize in a recording log. Such a recording log L comprises, for each alarm event, a record comprising a first information indicative of the date on which the event occurred, a second information indicative of the geographic coordinates of the place where the event occurred and a third information indicative of the type of event.

In a preferred embodiment of system 100, the aforesaid recording log L comprises, for each alarm event, a first recording record L1 in which the aforesaid alarm event information is recorded in unencrypted form.

Moreover, the recording log L comprises a second recording record L2 in which the aforesaid information on the event are transcribed and recorded encrypted, for example by using a 2048-bit public key encryption algorithm, of known type to an expert in the field.

Thereby, the information related to each log, saved encrypted using a public encryption key known to system 100, may only be read using the private or secret key of the encryption method which is known only to suppliers/managers of system 100 itself.

Moreover, in the case of tampering, the second encrypted recording record 12 (readable only by the supplier/manager of system 100 who has the private key) would not be compatible with the unencrypted recording record L1.

This ensures a first security level achieved by system 100 of the invention concerning the non-modifiable aspect of the information on the alarm events which were recorded in the recording log L.

In a further example embodiment, the aforesaid recording log L also comprises a third recording record L3. Such a third recording record L3 is generated by executing an MD5 hash operation on all the records in the recording log L0, L1,..., Ln-1 related to events prior to the current recording log Ln which were transcribed at time intervals t0, t1, ..., tn-1 prior to the moment in time tn of the current event which generated the log.

As is known to an expert in the field, the MD5 hash is a mathematical algorithm operating to "summarize" or "transform" data of any size into a 32 hexadecimal digit string: such a hash is calculated so that in the event of an alternation of one character alone in the input data, in particular in the first recording record L1 data of any one of the logs prior to the alarm event being examined, the 32 digit string which is obtained as a result of the aforesaid operation in the third recording record L3 of the event being examined, is completely different.

Thereby, if the flow of recorded logs were altered from the outside after the event, it would create an inconsistency which would be traceable by examining the sequential hash of the third recording record L3 for each event because the latter would no longer correspond with the unencrypted content of the first recording record L1 (or of the first records).

This ensures a second and more sophisticated security level achieved by system 100 of the invention concerning the non-modifiable aspect of the information on the alarm events which were recorded in the recording log L. In other words, the aforesaid recording log L of system 100 of the invention cannot be modified.

In a preferred embodiment of the invention, the system 100 further comprises an electronic processing unit or server 20 for managing the detection and reporting service of an unauthorized removal of a registration license plate from a motor vehicle 10.

Such an electronic unit or management server 20 is separate from the aforesaid electronic transceiver device 1 and from the at least one transponder 2, 3.

In particular, the above-mentioned wireless signaling means comprise a first ALM1 and a second ALM2 alarm signal and are configured to be transmitted to the server 20 for management of the detection and reporting service through a wireless telecommunication network. In particular, such a telecommunication network is the mobile radio network operating for example, according to the 4G/5G - fourth/fifth generation communication standard.

In one example embodiment, the electronic transceiver device 1 is adapted to generate the first ALM1 and the second ALM2 alarm signal. For this purpose, such a transceiver device 1 is provided with a respective module which allows the transfer of data through the mobile radio networks (for example, according to the 4G/5G - fourth/fifth generation communication standard).

It is worth noting that the aforesaid first alarm signal ALM1 is indicative of the occurrence of an alarm event. In particular, such a first alarm signal ALM1 transmitted to the management server 20 transports the contents of the recording log related to the event, in particular the encrypted information contained in the second recording record L2.

The management server 20 is configured to save such a second record L2 in a respective mass storage.

In one example embodiment of the system 100 of the invention, the second alarm signal ALM2 transmitted to the management server 20 is configured to be processed and transmitted by the latter, as a further second signal ALM2', to a portable device 40 of the owner of the motor vehicle 10 through a wireless telecommunication network, for example the mobile radio network (for example, according to the 4G/5G - fourth/fifth generation communication standard). In other words, the management server 20 is configured to generate such a further second alarm signal ALM2' on the basis of the second alarm signal ALM2 received.

For example, such a portable device 40 is a smartphone and such a further second alarm signal ALM2' transports an alert message for the owner of the motor vehicle 10. Such an alert message materializes for example, in an SMS message, email, emergency phone call made by an automatic operator or the like.

In other words, the management server 20 is configured to manage the phone calls and/or emergency messages sent to the smartphone 40 of the user, or possibly to law enforcement, in particular to report the occurrence of the tampering with or the removal of the license plates TP, TA from the motor vehicle 10.

In one example embodiment, the management server 20 of the detection and reporting service of an unauthorized removal of a registration license plate from a vehicle 10 may be connected to a central server 30 through a wireless or wired telecommunication network 60, for example the Internet network 60.

Such a central server 30 comprises, in a respective mass storage, identification data of the motor vehicles 10 circulating in a territory. Such a central server 30 materializes in a server of an institutional agency, such as for example, the server of Automobile Club d'Italia (Automobile Club of Italy, ACI) or that of the Department of Motor Vehicles.

It is worth noting that the management server 20 of system 100 is configured to be queried by law enforcement in order to verify the recording of an alarm event, for example the tampering with or removal of one of the license plates TP, TA of vehicle 10. Moreover, the management server 20 of system 100 is configured to also be queried by the central server 30 to provide data on one or more vehicles 10 circulating in a given territory.

With reference to figure 1, in the case of a motor vehicle equipped with system 100 of the invention, in the preferred embodiment in which the transceiver device 1 and one of the transponders 2, 3 are active RFID tags, an RFID reader, for example, a portal 50 attached transversely to the carriageway of the road and attached to the management server 20, is configured to query such RFID tags to read the recording log L saved therein. By comparing the data saved in such a log L of the vehicle with the data in the management server 20, the system is configured to enable/disable access of the motor vehicle to a restricted traffic area, report the theft of a license plate, etc.

In another example embodiment of system 100 of the invention, the electronic transceiver device 1 is connected to a control unit 5 (control station) of the motor vehicle 10 to receive, from said control unit 5, data indicative of the operating state of vehicle 10 itself.

The transceiver device 1 is configured to provide such operating data to the management server 20 through a third signal ALM3. Such a third alarm signal ALM3 transmitted to the management server 20 is configured to be processed and transmitted by the latter, as a further third signal ALM3', to a portable device 40 of the owner of the motor vehicle 10 through the mobile radio telecommunication network.

Thereby, the owner of vehicle 10 may periodically check the operating parameters of vehicle 10 itself. Moreover, by querying the management server 20, law enforcement and the authorized systems 30 may know for example, the speed of vehicle 10 and the route travelled, and also the operating state of the anti-particulate filters for controlling harmful emissions, etc.

It is also possible to record the movements of the motor vehicle 10 by monitoring the kilometers driven, the fuel consumption and the speed travelled, etc.

Moreover, as indicated above, system 100 of the invention comprises two suitable enclosures (not shown in the drawings), each configured to accommodate one of the two license plates TP, TA of the motor vehicle and the RFID tag 2, 3 attached to such license plates. In particular, such enclosures, made of clear plastic material, are attached to the bodywork of the motor vehicle 10 and comprise one or more proximity sensors operatively associated with the transceiver device 1. In case of forcing or tampering with the enclosure itself, such sensors are adapted to generate suitable reporting towards the RTLS transceiver device 1 configured to generate an alarm event which is processed by the system 100 like the prior ones.

As noted above, system 100 for the detection and reporting of an unauthorized removal of a registration license plate TP, TA from a motor vehicle 10 of the present invention has several advantages and achieves the preset objects.

In particular, once tampered with, that is following the removal of one of the license plates TP, TA, the system 100 can no longer be restored or installed on different vehicles. Indeed, neither of the two license plates TP, TA which comprises unequivocal identification data of the vehicle may be removed and applied on another vehicle because it would not be recognized by the RTLS transceiver device 1 of such a vehicle.

In other words, any motor vehicle 10 provided with system 100 is always unequivocally recognized and identified and the theft of the license plates of the motor vehicle is discouraged.

Moreover, also the failed powering of system 100 due to a detachment of the battery of the motor vehicle 10 may generate an alarm event.

To restore the proper operation of system 100 for example, due to fraudulent tampering, upon accidental damage or the replacement of the battery of vehicle 10, the use is provided of a specific device configured to reset the alarm event. In any case, it is not possible to cancel or edit the contents of the recording log of each event, which is always available to indicate the sequence of the alarm events involving vehicle 10.

In fact, with system 100 comprising the management server 20 in which there are stored the recording logs L of the alarm events involving vehicle 10 and which may be queried by the responsible bodies/authorities, the identification of vehicle 10 may be obtained, the presence of the motor vehicle in "sensitive areas" may be reported, thus in fact obtaining the traceability of vehicle 10 for the purposes of anti-fraud or anti-terrorism security.

Moreover, due to the connection of system 100 with the electronic control station 5 now present in all motor vehicles 10, system 100 of the invention also provides information on an operating state of the vehicle (speed, gaseous emissions, general state of the motor vehicle, data of the last overhaul, etc.) which may possibly be communicated to the responsible bodies following a query of the management server 20.

Those skilled in the art may make several changes and adaptations to the embodiments of the system, and may replace elements with others which are functionally equivalent in order to meet contingent needs, without departing from the scope of the following claims.

## Claims

1. An electronic system (100) for the detection and reporting of an unauthorized removal of a registration license plate (TP, TA) from a motor vehicle (10), the system comprising:
- an electronic transceiver device (1) attached to a portion of the bodywork of the motor vehicle (10) and connected to a supply voltage of the motor vehicle;
- at least one transponder (2, 3) attached to one of the license plates (TP, TA) of the motor vehicle (10);
said electronic transceiver device (1) and said at least one transponder (2, 3) being configured to communicate with each other through a wireless communication channel, said electronic transceiver device (1) being configured to periodically transmit a query signal (SI) within a respective query region, and to receive:
a first response signal (S1) from said at least one transponder (2, 3) when at least one transponder is within said query region,
a second response signal (S2) when the at least one transponder (2, 3) is brought outside said query region;
- an electronic unit for system management (20) separate from said electronic transceiver device (1) and from said at least one transponder (2, 3);
**characterized in that** the system further comprises:
- sequential and chronological recording means (L) of:
a first alarm event, in which the at least one transponder (2, 3) is brought outside the query region,
a second alarm event, in which said supply voltage source of the motor vehicle (10) is disconnected from the electronic transceiver device (1),
a third alarm event arising from a tampering of an enclosure adapted to contain the registration license plate (TP, TA) of the motor vehicle (10);
- wireless signaling means (ALM1, ALM2) configured to signal to the electronic management unit (20) the occurrence of at least one of said first, second and third alarm events,
wherein said sequential and chronological recording means (L) are associated with said at least one transponder (2, 3) and are a recording log, and
said recording log (L) comprises, for each alarm event:
- a first recording record (L1) where said alarm event information is recorded in unencrypted form;
- a second recording record (L2) where said alarm event information is recorded in encrypted form.

2. An electronic system (100) according to claim 1, wherein said recording log (L) further comprises, for each alarm event, a third recording record (L3) generated by executing an MD5 hash operation on all records of the recording logs related to alarm events prior to the alarm event of the current recording log.

3. An electronic system (100) according to claim 1, wherein said electronic transceiver device (1) is an active tag operating in radio-frequency as RTLS (Real Time Locating System) tag.

4. An electronic system (100) according to claim 1, wherein said at least one transponder comprises a first transponder (2) attached to the rear license plate (TP) of the motor vehicle (10) and a second transponder (3) associated with the front license plate (TA) of the motor vehicle.

5. An electronic system (100) according to claim 4, wherein at least one of said first (2) and second (3) transponder is a passive RFID radio frequency tag.

6. An electronic system (100) according to claim 1, wherein said signaling means comprise a first alarm signal (ALM1) in radio-frequency configured to be transmitted to the electronic management unit (20) through a wireless telecommunications network, said first alarm signal (ALM1) carrying the contents of the recording log (L) for the event.

7. An electronic system (100) according to claim 1, wherein said signaling means comprise a second alarm signal (ALM2) in radio-frequency configured to be transmitted to said electronic management unit (20) to generate a further alarm signal (ALM2') sent to a portable device (40) of the owner of the motor vehicle (10) through a wireless telecommunication network, said further alarm signal (ALM2') carrying an alert message.

8. An electronic system (100) according to claim 7, where said alert message carried by the further alarm signal (ALM2') is selected from the group consisting of: SMS message, email, emergency phone call.

9. An electronic system (100) according to claim 1, wherein said electronic management unit (20) is connected, through a telecommunication network (60), to a central server (30) which includes identification data of the motor vehicles (10) circulating in a territory, said electronic management unit (20) being queried by the central server (30) to provide data on one or more vehicles circulating in the territory.

10. An electronic system (100) according to claim 1, wherein said electronic transceiver device (1) is connected to a control unit (5) of the motor vehicle (10) to receive from said control unit (5) data indicative of the operating state of the vehicle.

11. An electronic system (100) according to claim 10, wherein said electronic transceiver device (1) is configured to provide such operating state data to the electronic management unit (20) through a third alarm signal (ALM3), said third alarm signal being processed to generate a further first signal (ALM3') sent to the portable device (40) of the owner of the motor vehicle (10) through the wireless telecommunication network.

## Patentansprüche

1. Elektronisches System (100) für die Detektion und das Berichten einer unautorisierten Entfernung eines Registrierungsnummernschilds (TP, TA) von einem Motorfahrzeug (10), wobei das System umfasst:
- eine elektronische Transceiver-Vorrichtung (1), welche an einem Abschnitt der Karosserie des Motorfahrzeugs (10) angebracht ist und mit einer Versorgungsspannung des Motorfahrzeugs verbunden ist;
- wenigstens einen Transponder (2, 3), welcher an einem der Nummernschilder (TP, TA) des Motorfahrzeugs (10) angebracht ist;
wobei die elektronische Transceiver-Vorrichtung (1) und der wenigstens eine Transponder (2, 3) dazu eingerichtet sind, durch einen drahtlosen Kommunikationskanal miteinander zu kommunizieren,
wobei die die elektronische Transceiver-Vorrichtung (1) dazu eingerichtet ist, innerhalb eines jeweiligen Abfragebereichs periodisch ein Abfragesignal (SI) zu übertragen und zu empfangen:
ein erstes Antwortsignal (S1) von dem wenigstens einen Transponder (2, 3), wenn sich wenigstens ein Transponder innerhalb des Abfragebereichs befindet,
ein zweites Antwortsignal (S2), wenn der wenigstens eine Transponder (2, 3) nach außerhalb des Abfragebereichs gebracht wird;
- eine elektronische Einheit für eine Systemverwaltung (20), welche separat von der elektronischen Transceiver-Vorrichtung (1) und von dem wenigstens einen Transponder (2, 3) vorliegt;
**dadurch gekennzeichnet, dass** das System ferner umfasst:
- sequenzielle und chronologische Aufzeichnungsmittel (L) von:
einem ersten Alarmereignis, bei welchem der wenigstens eine Transponder (2, 3) nach außerhalb des Abfragebereichs gebracht wird,
einem zweiten Alarmereignis, bei welchem die Spannungsversorgungsquelle des Motorfahrzeugs (10) von der elektronischen Transceiver-Vorrichtung (1) getrennt wird,
einem dritten Alarmereignis, welches aus einer Manipulation einer Einfassung resultiert, welche dazu eingerichtet ist, das Registrierungsnummernschild (TP, TA) des Motorfahrzeugs (10) zu enthalten;
- drahtlose Signalisierungsmittel (ALM1, ALM2), welche dazu eingerichtet sind, der elektronischen Verwaltungseinheit (20) das Auftreten wenigstens eines des ersten, des zweiten und des dritten Alarmereignisses zu signalisieren,
wobei die sequenziellen und chronologischen Aufzeichnungsmittel (L) dem wenigstens einen Transponder (2, 3) zugeordnet sind und ein Aufzeichnungs-Log sind, und
das Aufzeichnungs-Log (L) für jedes Alarmereignis umfasst:
- einen ersten Aufzeichnungsdatensatz (L1), in welchem die Alarmereignisinformationen in unverschlüsselter Form aufgezeichnet sind;
- einen zweiten Aufzeichnungsdatensatz (L2), in welchem die Alarmereignisinformationen in verschlüsselter Form aufgezeichnet sind.

2. Elektronisches System (100) nach Anspruch 1, wobei das Aufzeichnungs-Log (L) für jedes Alarmereignis ferner einen dritten Aufzeichnungsdatensatz (L3) umfasst, welcher durch ein Ausführen eines MD5-Hash-Vorgangs an allen Datensätzen der Aufzeichnungs-Logs generiert wird, welche Alarmereignisse vor dem Alarmereignis des aktuellen Aufzeichnungs-Logs betreffen.

3. Elektronisches System (100) nach Anspruch 1, wobei die elektronische Transceiver-Vorrichtung (1) ein aktives Tag ist, welches in Funkfrequenz als RTLS- (Real Time Locating System) Tag arbeitet.

4. Elektronisches System (100) nach Anspruch 1, wobei der wenigstens eine Transponder einen ersten Transponder (2), welcher an dem hinteren Nummernschild (TP) des Motorfahrzeugs (10) angebracht ist, und einen zweiten Transponder (3) umfasst, welcher dem vorderen Nummernschild (TA) des Motorfahrzeugs zugeordnet ist.

5. Elektronisches System (100) nach Anspruch 4, wobei wenigstens einer des ersten (2) und des zweiten (3) Transponders ein passives RFID-Funkfrequenz-Tag ist.

6. Elektronisches System (100) nach Anspruch 1, wobei die Signalisierungsmittel ein erstes Alarmsignal (ALM1) in Funkfrequenz umfassen, welches dazu eingerichtet ist, durch ein drahtloses Telekommunikationsnetzwerk an die elektronische Verwaltungseinheit (20) übertragen zu werden, wobei das erste Alarmsignal (ALM1) die Inhalte des Aufzeichnungs-Logs (L) für das Ereignis trägt.

7. Elektronisches System (100) nach Anspruch 1, wobei die Signalisierungsmittel ein zweites Alarmsignal (ALM2) in Funkfrequenz umfassen, welches dazu eingerichtet ist, an die elektronische Verwaltungseinheit (20) übertragen zu werden, um ein weiteres Alarmsignal (ALM2') zu generieren, welches durch ein drahtloses Telekommunikationsnetzwerk an eine tragbare Vorrichtung (40) des Besitzers des Motorfahrzeugs (10) gesendet wird, wobei das weitere Alarmsignal (ALM2') eine Warnmeldung trägt.

8. Elektronisches System (100) nach Anspruch 7, wobei die von dem weiteren Alarmsignal (ALM2') getragene Warnmeldung ausgewählt ist aus der Gruppe, bestehend aus: SMS-Nachricht, E-Mail, Notfall-Telefonanruf.

9. Elektronisches System (100) nach Anspruch 1, wobei die elektronische Verwaltungseinheit (20) durch ein Telekommunikationsnetzwerk (60) mit einem zentralen Server (30) verbunden ist, welcher Identifikationsdaten der Motorfahrzeuge (10) umfasst, welche in einem Gebiet verkehren, wobei die elektronische Verwaltungseinheit (20) durch den zentralen Server (30) gefragt wird, Daten über ein oder mehrere Fahrzeuge bereitzustellen, welche in dem Gebiet verkehren.

10. Elektronisches System (100) nach Anspruch 1, wobei die elektronische Transceiver-Vorrichtung (1) mit einer Steuereinheit (5) des Motorfahrzeugs (10) verbunden ist, um von der Steuereinheit (5) Daten zu empfangen, welche für den Betriebszustand des Fahrzeugs indikativ sind.

11. Elektronisches System (100) nach Anspruch 10, wobei die elektronische Transceiver-Vorrichtung (1) dazu eingerichtet ist, der elektronischen Verwaltungseinheit (20) durch ein drittes Alarmsignal (ALM3) derartige Betriebszustandsdaten bereitzustellen, wobei das dritte Alarmsignal verarbeitet wird, um ein weiteres erstes Signal (ALM3') zu generieren, welches durch das drahtlose Telekommunikationsnetzwerk an die tragbare Vorrichtung (40) des Besitzers des Motorfahrzeugs (10) gesendet wird.

## Revendications

1. Système électronique (100) de détection et de signalement d'un enlèvement non autorisé d'une plaque d'immatriculation (TP, TA) d'un véhicule à moteur (10), le système comprenant :
- un dispositif émetteur-récepteur électronique (1) fixé à une portion de la carrosserie du véhicule à moteur (10) et connecté à une tension d'alimentation du véhicule à moteur ;
- au moins un transpondeur (2, 3) fixé à l'une des plaques d'immatriculation (TP, TA) du véhicule à moteur (10) ;
ledit dispositif émetteur-récepteur électronique (1) et ledit au moins un transpondeur (2, 3) étant configurés pour communiquer l'un avec l'autre par l'intermédiaire d'un canal de communication sans fil, ledit dispositif émetteur-récepteur électronique (1) étant configuré pour transmettre périodiquement un signal d'interrogation (SI) dans une région d'interrogation respective, et pour recevoir :
un premier signal de réponse (S1) provenant dudit transpondeur (2, 3), au moins au nombre de un, lorsqu'au moins un transpondeur se trouve dans ladite région d'interrogation,
un deuxième signal de réponse (S2) lorsque le transpondeur (2, 3), au moins au nombre de un, est amené à l'extérieur de ladite région d'interrogation ;
- une unité électronique de gestion du système (20) séparée dudit dispositif émetteur-récepteur électronique (1) et dudit transpondeur (2, 3), au moins au nombre de un ;
**caractérisé en ce que** le système comprend en outre :
- des moyens d'enregistrement séquentiel et chronologique (L) :
d'un premier événement d'alarme, au cours duquel le transpondeur (2, 3), au moins au nombre de un, est amené à l'extérieur de la région d'interrogation,
d'un deuxième événement d'alarme, au cours duquel ladite source de tension d'alimentation du véhicule à moteur (10) est déconnectée du dispositif émetteur-récepteur électronique (1),
d'un troisième événement d'alarme résultant d'une altération d'un boîtier adapté pour contenir la plaque d'immatriculation (TP, TA) du véhicule à moteur (10) ;
- des moyens de signalisation sans fil (ALM1, ALM2) configurés pour signaler à l'unité de gestion électronique (20) l'occurrence d'au moins un desdits premier, deuxième et troisième événements d'alarme,
dans lequel lesdits moyens d'enregistrement séquentiel et chronologique (L) sont associés audit transpondeur (2, 3), au moins au nombre de un, et constituent un journal d'enregistrement, et
ledit journal d'enregistrement (L) comprend, pour chaque événement d'alarme :
- un premier enregistrement (L1) où lesdites informations d'événement d'alarme sont enregistrées sous forme non cryptée ;
- un deuxième enregistrement (L2) où lesdites informations d'événement d'alarme sont enregistrées sous forme cryptée.

2. Système électronique (100) selon la revendication 1, dans lequel ledit journal d'enregistrement (L) comprend en outre, pour chaque événement d'alarme, un troisième enregistrement (L3) généré en exécutant une opération de hachage MD5 sur tous les enregistrements des journaux d'enregistrement liés aux événements d'alarme avant l'événement d'alarme du journal d'enregistrement courant.

3. Système électronique (100) selon la revendication 1, dans lequel ledit dispositif émetteur-récepteur électronique (1) est une étiquette active fonctionnant en radiofréquence comme étiquette RTLS (système de localisation en temps réel).

4. Système électronique (100) selon la revendication 1, dans lequel ledit transpondeur, au moins au nombre de un, comprend un premier transpondeur (2) fixé à la plaque d'immatriculation arrière (TP) du véhicule à moteur (10) et un second transpondeur (3) associé à la plaque d'immatriculation avant (TA) du véhicule à moteur.

5. Système électronique (100) selon la revendication 4, dans lequel au moins un desdits premier (2) et second (3) transpondeurs est une étiquette radiofréquence RFID passive.

6. Système électronique (100) selon la revendication 1, dans lequel lesdits moyens de signalisation comprennent un premier signal d'alarme (ALM1) en radiofréquence configuré pour être transmis à l'unité de gestion électronique (20) par l'intermédiaire d'un réseau de télécommunication sans fil, ledit premier signal d'alarme (ALM1) portant le contenu du journal d'enregistrement (L) de l'événement.

7. Système électronique (100) selon la revendication 1, dans lequel lesdits moyens de signalisation comprennent un deuxième signal d'alarme (ALM2) en radiofréquence configuré pour être transmis à ladite unité de gestion électronique (20) pour générer un signal d'alarme supplémentaire (ALM2') envoyé à un dispositif portable (40) du propriétaire du véhicule à moteur (10) par l'intermédiaire d'un réseau de télécommunication sans fil, ledit signal d'alarme supplémentaire (ALM2') portant un message d'alerte.

8. Système électronique (100) selon la revendication 7, dans lequel ledit message d'alerte porté par le signal d'alarme supplémentaire (ALM2') est sélectionné dans le groupe constitué de : un message SMS, un courriel, un appel téléphonique d'urgence.

9. Système électronique (100) selon la revendication 1, dans lequel ladite unité de gestion électronique (20) est connectée, par l'intermédiaire d'un réseau de télécommunication (60), à un serveur central (30) qui inclut des données d'identification des véhicules à moteur (10) circulant sur un territoire, ladite unité de gestion électronique (20) étant interrogée par le serveur central (30) pour fournir des données sur un ou plusieurs véhicules circulant sur le territoire.

10. Système électronique (100) selon la revendication 1, dans lequel ledit dispositif émetteur-récepteur électronique (1) est connecté à une unité de commande (5) du véhicule à moteur (10) pour recevoir de ladite unité de commande (5) des données indiquant l'état de fonctionnement du véhicule.

11. Système électronique (100) selon la revendication 10, dans lequel ledit dispositif émetteur-récepteur électronique (1) est configuré pour fournir ces données d'état de fonctionnement à l'unité de gestion électronique (20) par l'intermédiaire d'un troisième signal d'alarme (ALM3), ledit troisième signal d'alarme étant traité pour générer un autre premier signal (ALM3') envoyé au dispositif portable (40) du propriétaire du véhicule à moteur (10) par l'intermédiaire du réseau de télécommunication sans fil.
